# EUROPEAN PATENT APPLICATION

(11) **EP 2 299 382 A1**
(43) Date of publication of application: **23.03.2011**
(21) Application number: 10176000.7
(22) Date of filing: 09.09.2010
(51) Int. Cl.: G06K 7/00

(54) **Improved portable radio frequency reader for reading and writing data in a microchip applied to a vehicle**

(30) Priority: 09.09.2009 IT BO20090575
(71) Applicant: I.CAR S.r.l., 40128 Bologna (IT)
(72) Inventor: Muriana, Roberto, 40123 Bologna (IT)
(74) Representative: Provvisionato, Paolo

(57) **Abstract**

An improved portable radio frequency reader for reading and writing data in a microchip applied to a vehicle comprises a logic control unit, a communication group, one or more data interfaces, and an antenna for receiving and transmitting data from and towards the microchip. The reader operates at about 13.56 MHz and is set to a maximum communication distance from about 11cm to about 30cm. The reader is included in a kit for an automatic vehicle identification system of the type comprising RFID tags.

## Description

The present invention concerns the field of Radio Frequency Identification (RFID) system for automatically identifying objects, and it has been developed with particular attention to an improved portable radio frequency reader for reading and writing data in a microchip applied to a vehicle.

RFID systems have now been known for many years and they are made up of a plurality of RFID tags, physically associated with the objects to be identified, and a device capable of interacting with such tags through a low-power electromagnetic field (by reflection). Each RFID tag is usually made up of a support inside which a memory for storing data, preferably a microchip, an antenna and, optionally, electric power supply means, for example a battery, are housed.

Microchips can be for just reading and can contain, for example, a code that is unique throughout the whole world so as to make it certain that they, and therefore the object with which they are associated, will be recognised. Microchips can also contain a memory that can be read and written in an analogous way to that of any electronic device. For security application, many microchips require at least one password in order to be able to be read and/or written. The antennae of RFID tags depend on the type of application that is intended to be made, on the type of electro-magnetic coupling used and also on the environment in which they are operating. Moreover, ISO has standardised different classes of frequencies for the use of RFID tags, each of which has restrictions in geographical use and in reading and/or writing range, making it recommended for use in specific applications.

A particularly interesting application of RFID systems has been developed by the same Owner and concerns a system for automatically identifying a vehicle comprising electronic identification means, an RFID tag, capable of storing data and transmitting it and/or receiving it through Radio Frequency Identification technology. The RFID tag is associated with the vehicle, for example, but not limitingly, it is applied to a portion of the vehicle structure, and data of different types and sorts is stored on it. For example, but not limitingly, it is possible to insert: name and tax ID number of the owner of the vehicle and/or VAT identification number if the owner of the vehicle is a legal person, type of automobile, vehicle identification number, licence plate number of the vehicle and date of first registration. Similarly, it will be possible to store additional information on the microchip concerning technical characteristics of the vehicle, like for example exterior characteristics, technical characteristics linked to the security of the vehicle. In any case, a vehicle identification code will also be stored on the microchip that can be used to obtain further information inserted in a central database.

The purpose of the present invention is to provide an improved portable reading and writing device for an RFID system, capable of improving the performance of known devices. Another purpose of the present invention is to make a device for reading and writing a microchip particularly suitable for being used in the system for automatically identifying a vehicle described above.

A further purpose of the present invention is to make a device of the type described above that is cost-effective to make, easy to use and that requires little maintenance.

In order to achieve the purposes indicated above, the object of the present invention is an improved portable radio frequency device for reading and writing data in a microchip as defined in the following claims.

Further characteristics and advantages of the present invention will become clear from the following detailed description of a preferred embodiment, with reference to the attached figures, given purely as an example and not for limiting purposes, in which:
- figure 1 is a front view of an improved portable radio frequency reader according to the present invention; and
- figure 2 is a schematic front view of an antenna of the portable reader of figure 1.

In an RFID system the term "reader" is generally meant to indicate an electronic device intended to read, and decode, as well as write, and encode, data on an RFID tag. The reader is also able to exchange data with further external devices, like for example a computer and/or a business network.

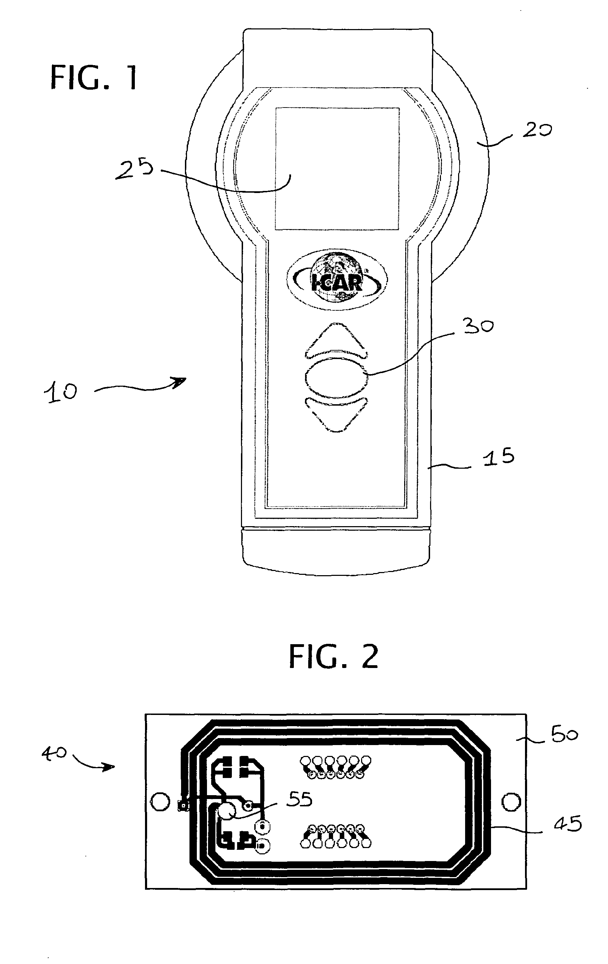

With reference to figure 1, the improved portable radio frequency reader according to the present invention comprises a housing structure 10 inside which there are a logic control unit, a communication group, one or more data interfaces, and one or more antennae for receiving and transmitting data from and towards RFID tags.

The housing structure 10 comprises a first portion 15 with an elongated shape according to a preferential direction, substantially rectangular, inside which the logic control unit, one or more data interfaces and an electric power supply group, for example a storage cell, even more preferably batteries, are housed. According to a particularly advantageous characteristic of the present invention, the device also comprises inlet means for an external electric power supply, capable, during use, of directly feeding the device and/or recharging the storage cell inside the housing. The housing structure also comprises a second portion 20 having a substantially circular shape, inside which the communication group and one or more antennae for receiving and transmitting data are housed.

On the upper surface of the housing structure there are a plurality of openings inside which input/output means, I/O, are inserted, connected to the communication group and to the logic control unit. The I/O means comprise, for example, a plurality of buttons 30 and a display 25, of the liquid crystal, retro-illuminated or active matrix type. The buttons 20 are advantageously positioned in the rectangular portion 15 of the housing structure 10 so as to make it easier to use them when a user holds the portable reader, promoting its ergonomic characteristics during use. The display 25 is preferably positioned in the circular portion 20 of the housing structure 10.

The input/output means also comprise a USB port capable of receiving a USB connector of a mass storage device, for example a USB key or stick. The USB key comprises a mass memory, typically flash memory, on which it is possible to store information in output from and/or in input to the improved reader. In this way, without the need to connect the portable reader directly to a computer or to a wireless network, it is possible to transfer data from the USB key to the reader so that it, in turn, transfers it onto the RFID tag, or else it is possible to transfer the data that the reader has previously read from the RFID tag onto the USB key.

According to a particularly advantageous characteristic of the present invention, it is possible to foresee that each USB key contains a code to identify and authorise the operator. Whenever an operator intends to use the reader he must first insert his USB key. If the reader, reading the code contained in the USB key, does not recognise the operator as an authorised operator, it does not allow the reader to be used. In this way the reader can only be used by authorised people, and moreover, in a situation in which the improved reader is used by many operators, it is possible for all of the operators to use the same reader, each of the operators using his own personal USB key.

As stated, the antenna is arranged inside the circular portion of the housing structure, and comprises a copper race, or a metal wire, of predetermined dimensions and thickness, arranged wound upon itself for a predetermined number of coils. The dimensions of the copper race and the number of coils are directly proportional to the power in antenna, which is the element that transforms currents and voltages (electric power) into irradiated power (magnetic field). Experiments carried out by the Owner have made it possible to obtain antenna configurations directly on a printed circuit, in which the impedances of the elements that make up the transmission system, transmitter, transmission line and antenna, are substantially the same as one another. This allows maximum efficiency of the antenna to be obtained. One of the preferred embodiments of the present invention foresees that the portable reader transmits and receives the data over a carrier wave of 13.56 MHz, with a shift of about ± 7 KHz, with ASK modulation according to the standard ISO 15693. As better illustrated in figure 2, the antenna 40 is made up of a copper race 45 integrated directly in the flat solid insulating substrate 50 of constant thickness of a printed circuit, The copper plate 45 is wound many times upon itself, preferably but not limitingly three times, so as to take on a substantially rectangular configuration with rounded corners, with a long side of about 64 mm and a short side of about 35 mm. A variable capacitor 55 is also inserted on the printed circuit to tune the antenna, during use, to the tag on which the data reading and/or writing operations have to be carried out.

Experiments carried out by the Owner have permitted data transmissions between the portable reader with a single antenna and the RFID tags, with carrier wave of 13.56 MHz, at greater distances, for example even of 11, 15 and even up to 30 cm, with respect to the distances of known devices that adopt the same protocols and wavelengths. This characteristic is particularly advantageous since the reading/writing of an RFID tag can take place within close security distances, i.e. distances that do not allow interference with other devices or RFID tags, but, at the same time, within distances not so close as to make the application of the reader complex. An example of this situation concerns the arrangement of an RFID tag on a portion of an automobile that is not perfectly flat, like for example a windscreen or an area of the bodywork. In these situations the need to position the reader a few cm from the RFID tag could make communication with the reader impossible and/or disturb it.

The improved reader according to the present invention is arranged to communicate with the RFID tags through standard data encoding and/or encryption protocols. Such a characteristic is particularly advantageous in an application like that of the vehicle identification system described above since the data stored on the RFID tags contains sensitive information and thus are usually encoded and/or encrypted through special and highly sophisticated encoding systems, and thus keys. Known communication protocols of encoded and/or encrypted data foresee particular parameters according to the type of transmission frequency used, the number of bits that can be transferred, and, consequently, their field of application.

According to the present invention the communication process, which as stated earlier takes place according to the ISO standard, between the improved reader and the tag consists of four steps:
- activation of the tag through the Radio Frequency field of the reader;
- waiting for the tag to receive a command;
- transmission of the command by the reader; and
- transmission of the response from the tag.

The tags can be made with various storage capacities, and, if so required, they can be personalised based on requirements. According to a particularly advantageous characteristic of the present invention, the storage area of each tag is divided into many distinct storage areas, preferably, but not limitingly, into two areas: an unprotected storage area, in other words accessible to any user who uses a reader that with respect to the ISO standard 15693, and a protected storage area protected through an encryption system, in other words accessible only by authorised users. In the case of a vehicle identification system, as described above, all the sensitive data is stored inside the protected storage area so as to ensure the privacy of the owner of the vehicle.

The process for protecting the data contained in the protected memory is based on encryption algorithms and secret keys. Both the tag and the reader must contain the same secret keys inside them to allow data to be exchanged between them. In particular, the process for allowing access to the protected memory comprises two essential steps:
- authentication: after having selected the tag, the reader carries out an authentication thereof to verify that it has been enabled to access the data;
- signature: to modify the data, the reader must transmit a string of data obtained through an algorithm in which the parameters are the data to be transmitted, the secret keys and the preferably unique serial number of the tag.

Both of the steps described above are carried out using a diversified key calculated from the secret keys and the serial number of the tag. This makes it possible not to replicate the same enabling sequence for two tags having the same secret keys.

A further safety feature can be implemented by encrypting the data to be stored in the tag through proprietary algorithms having the same data as the secret keys as input values. According to another of the preferred embodiments of the present invention, the portable reader comprises storage means capable of simultaneously storing a plurality of pieces of data linked to a plurality of tags. In use, the data is stored on the portable reader through a computer connected via cable or through a connection to a network. Then, the operator proceeds to transfer such data onto many tags without being forced to go back to the computer, or having to reconnect to the network, and repeat, on each occasion, the operation of loading data inside the portable reader. According to a further embodiment, the mass storage device connected to the USB port, for example the USB key, can be used as mass memory of the portable reader, in which to store a quantity of data to be accessed when needed to then write it onto each tag. In this case, the memory of the reader and/or of the USB key store all of the information coming from the tags without the need to download the data onto a computer or into a network on each occasion.

Of course, without affecting the principle of the finding, the embodiments and the details can be widely varied with respect to what has been described and illustrated, without for this reason departing from the scope of the invention.

## Claims

1. Improved portable radio frequency reader for reading and writing data in a microchip applied to a vehicle, of the type comprising a logic control unit, a communication group, one or more data interfaces, and an antenna for receiving and transmitting data from and towards the microchip, **characterised in that** the antenna is configured operating at a frequency of about 13.56 MHz, with a shift of about ± 7 KHz, and it allows data to be received and transmitted between the reader and a microchip up to a maximum distance within the range from about 11 cm to about 30 cm.

2. Portable reader according to claim 1, **characterised in that** the receiving and transmitting of data between the reader and the microchip takes place up to a maximum distance within the range from about 15 cm to about 30 cm.

3. Portable reader according to claim 2, **characterised in that** the receiving and transmitting of data between the reader and the microchip takes place up to a maximum distance of about 30 cm.

4. Improved reader according to any one of the previous claims, **characterised in that** the antenna is integrated in a printed circuit.

5. Improved reader according to any one of the previous claims, **characterised in that** the antenna comprises a copper race wound many times upon itself so as to take up a substantially rectangular configuration with rounded corners.

6. Improved reader according to claim 5, **characterised in that** the rectangular antenna comprises a long side of about 64 mm and a short side of about 35 mm.

7. Portable reader according to any one of the previous claims, **characterised in that** the data interfaces comprise a USB port for connection to an external mass storage device.

8. Improved reader according to any one of the previous claims, **characterised in that** it comprises internal storage means.

9. Kit for an electronic automatic vehicle identification system of the type comprising electronic identification means associated with a vehicle, **characterised in that** it comprises an improved portable reader according to any one of the previous claims, and also one or more RFID tags.

10. Kit according to claim 9, **characterised in that** the one or more RFID tags comprise storage means, the storage means being divided into at least two storage areas, one of the two storage areas being protected through an encryption system.
